# FASCICULE DE BREVET EUROPEEN

(11) **EP 0 766 875 B1**
(45) Date de publication et mention de la délivrance du brevet: **28.06.2000**
(21) Numéro de dépôt: 96913606.8
(22) Date de dépôt: 18.04.1996
(51) Int. Cl.: H01R 13/41

(54) **CONNECTEUR ELECTRIQUE, NOTAMMENT POUR LE RACCORDEMENT D'UNE CARTE A MEMOIRE ELECTRONIQUE**
ELEKTRISCHER VERBINDER INSBESONDERE FÜR DEN ANSCHLUSS EINER ELEKTRONISCHEN SPEICHERKARTE
ELECTRICAL CONNECTOR, IN PARTICULAR FOR CONNECTING AN ELECTRONIC MEMORY CARD

(30) Priorité: 21.04.1995 FR 9504783
(43) Date de publication de la demande: 09.04.1997
(73) Titulaire: ITT COMPOSANTS ET INSTRUMENTS, F-92220 Bagneux (FR)
(72) Inventeur: BRICAUD, Hervé, F-39100 Dole (FR); VALCHER, Fabrice, F-39100 Dole (FR)
(74) Mandataire: Kohn, Philippe
(86) Numéro de dépôt international: FR9600589
(87) Numéro de publication internationale: WO9633527

(56) Documents cités:
- EP-A- 0 516 943
- EP-A- 0 803 835
- US-A- 2 099 555
- US-A- 5 249 988

## Description

La présente invention concerne un connecteur électrique, notamment pour le raccordement d'une carte à circuit(s) intégré(s) à contact, également appelée carte à mémoire électronique, comportant sur l'une de ses faces principales une pluralité de plages de contact électrique alignées parallèlement à la direction d'introduction de la carte dans un dispositif de lecture-écriture.

L'invention concerne plus particulièrement un connecteur du type comportant un support en matériau isolant réalisé par moulage présentant une face plane de contact, parallèle à la direction d'introduction de la carte, et une pluralité de conducteurs électriques parallèles en forme de lames déformables élastiquement qui s'étendent longitudinalement, parallèlement à la direction d'introduction de la carte, et dont chacune comprend une première extrémité incurvée de contact avec l'une des plages de la carte faisant saillie hors du plan de la face plane de contact du support, une portion médiane de liaison de la lame au support et une seconde extrémité de raccordement de la lame, par exemple à un circuit de traitement du dispositif de lecture-écriture, du type dans lequel la partie médiane de liaison de chaque lame comporte des moyens de fixation de la lame au support qui sont constitués par une patte latérale d'accrochage en forme de harpon qui s'étend parallèlement à la partie médiane de liaison, le long d'un premier bord longitudinal de celle-ci, et qui est reçue dans une fente correspondante du support.

Une telle conception est décrite et représentée dans la demande de brevet français FR-A-2.714.539.

Elle est satisfaisante en ce qu'elle permet de réaliser à un coût réduit des connecteurs sans faire appel à la technique de surmoulage du matériau isolant autour de la partie d'extrémité libre des lames qui assure leur encastrement.

Pour certaines applications, et notamment lorsque le connecteur ne comporte pas de couvercle complémentaire du support isolant assurant un encastrement suffisant des lames, on constate que le maintien en position de fonctionnement des lames peut s'avérer insuffisant en particulier lors de la phase d'introduction et de mise en place de la carte à mémoire.

La présente invention a pour but de proposer un perfectionnement de la conception d'un connecteur électrique du type mentionné précédemment qui remédie à cet inconvénient.

Dans ce but, l'invention propose un connecteur électrique caractérisé en ce que chaque lame de contact comporte une patte latérale de stabilisation qui s'étend le long du second bord longitudinal de la partie médiane de liaison, avec une fente la séparant de ce bord longitudinal, et qui prend appui contre au moins une surface de stabilisation en vis-à-vis du support parallèle au plan de la face plane de contact.

Grâce à un tel agencement, on peut supprimer tout phénomène de basculement de chaque lame de contact, autour de son axe longitudinal.

Selon d'autres caractéristiques de l'invention :
- la patte latérale de stabilisation s'étend parallèlement à la partie médiane de liaison ;
- la patte latérale de stabilisation est reçue dans une fente correspondante du support délimitée par deux surfaces parallèles de stabilisation ;
- la patte latérale d'accrochage et la patte latérale de stabilisation sont chacune reliée au bord longitudinal adjacent de la partie médiane de liaison par une traverse et les deux traverses sont alignées transversalement ;
- la partie médiane de liaison comporte une branche dont l'extrémité libre se prolonge par l'extrémité de raccordement de la lame ;
- la branche de la partie médiane de liaison de la lame s'étend en regard d'une rainure formée en vis-à-vis dans une surface plane du support parallèle au plan de ladite face plane de contact pour permettre un fléchissement de la branche selon une direction sensiblement perpendiculaire à la face plane de contact du support ;
- la rainure en regard de laquelle s'étend la branche de la partie médiane de liaison est formé dans une face plane d'appui du support parallèle et opposée à la face plane de contact, et le support comporte, pour chaque lame, une encoche longitudinale qui prolonge la rainure et par laquelle l'extrémité incurvée de contact fait saillie hors du plan de la face plane de contact ;
- l'extrémité incurvée de contact de chaque lame est reliée à la partie médiane de liaison par une zone élargie dont la largeur transversale est supérieure à la largeur d'une gorge formée dans le fond de la rainure et est inférieure à la largeur de la rainure ;
- l'extrémité de raccordement de chaque lame s'étend selon une direction perpendiculaire au plan de la face plane de contact du support en éloignement de la branche de la partie médiane de liaison de la lame et le long d'une des faces latérales du support.

L'invention propose également un connecteur électrique pour le raccordement d'une carte à mémoire électronique comportant sur l'une de ses faces principales une pluralité de plages de contact électrique alignées parallèlement à la direction d'introduction de la carte dans un dispositif de lecture-écriture, caractérisé en ce qu'il est réalisé conformément aux enseignements des revendications.

D'autres caractéristiques et avantages de l'invention apparaîtront à la lecture de la description détaillée qui suit pour la compréhension de laquelle on se reportera aux dessins annexés dans lesquels :
- La figure 1 est une vue de dessus à grande échelle du support isolant d'un connecteur électrique réalisé conformément aux enseignements de l'invention ;
- la figure 2 est une vue latérale, selon la flèche F2 de la figure 1 ;
- la figure 3 est une vue de dessous du connecteur de la figure 1 ;
- la figure 4 est une vue latérale en section selon la ligne 4-4 de la figure 3 ;
- la figure 5 est une vue du détail A de la figure 4 illustré à plus grande échelle;
- la figure 6 est une vue de détail à plus grande échelle de la figure 3;
- la figure 7 est une vue de détail en section selon la ligne 7-7 de la figure 6;
- la figure 8 est une vue de détail en section selon la ligne 8-8 de la figure 6 ;
- la figure 9 est une vue de dessus à grande échelle d'un conducteur électrique, réalisé conformément aux enseignements de l'invention, destiné à équiper le support isolant ;
- la figure 10 est une vue latérale de gauche du conducteur de la figure 9 ;
- les figures 11 et 12 sont des vues similaires à celles des figures 1 et 3 qui illustrent le connecteur avec ses lames conductrices en position montée.

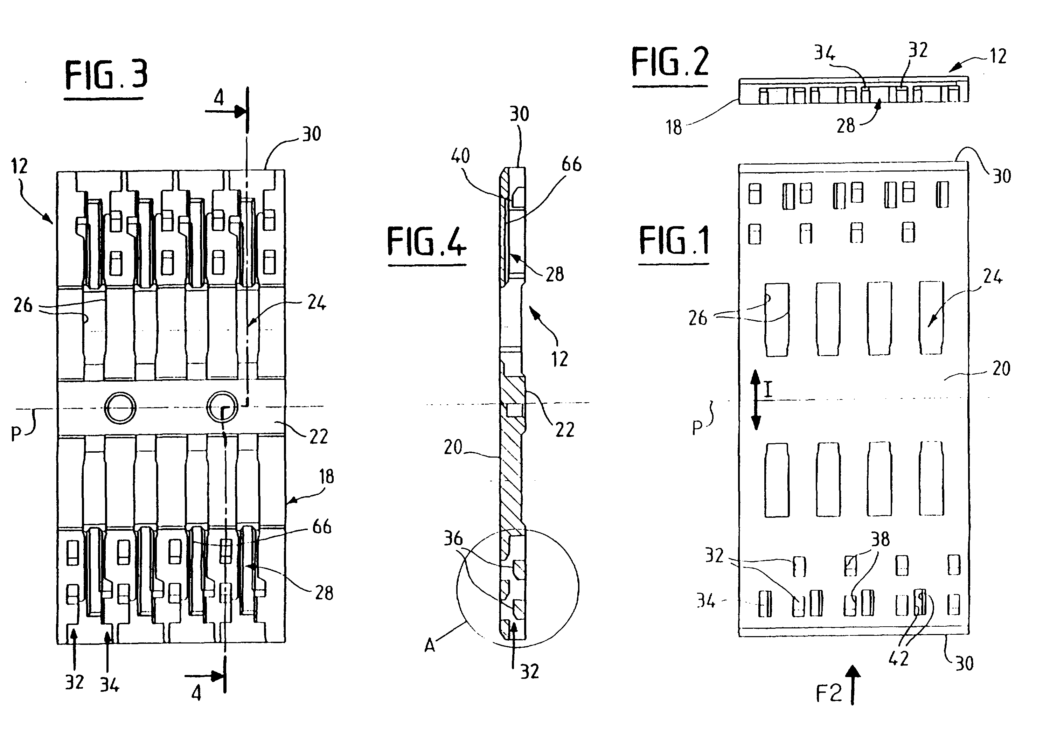

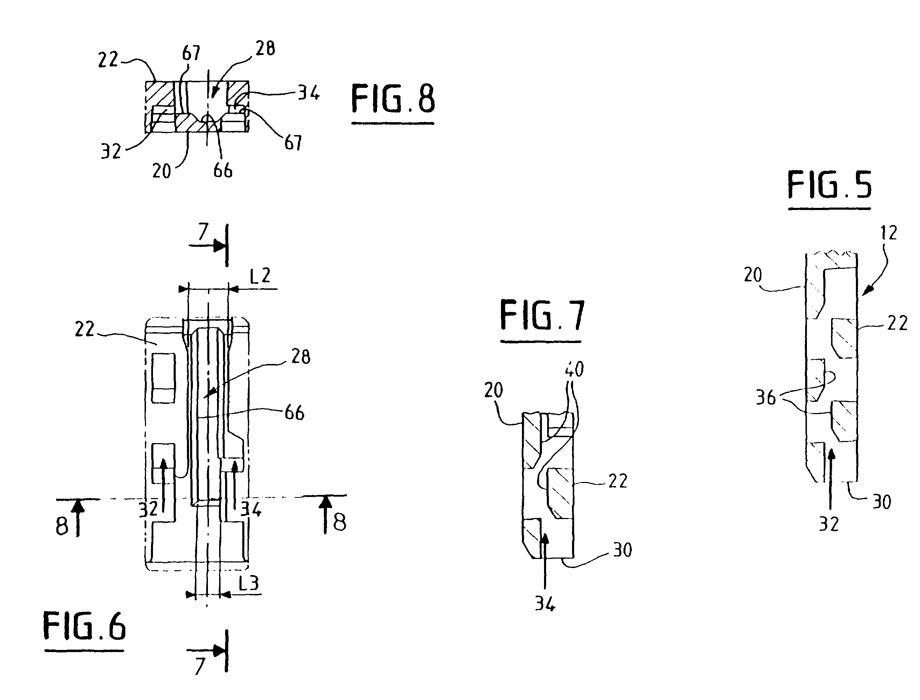

On a représenté aux figures 1 à 5 et 8, le boîtier ou support en matériau isolant 12 d'un connecteur électrique destiné a être équipé par une série de conducteurs électriques 14 dont l'un est illustré aux figures 6 et 7.

Le support 12 est pour l'essentiel constitué d'une plaque moulée en matière plastique délimitée par une face plane de contact 20, par une face plane parallèle d'appui 22 et par une paroi ou face latérale 18 de contour sensiblement rectangulaire.

Dans sa partie principale, le support 12 présente une symétrie générale de conception par rapport à un plan horizontal P (en considérant les figures 1 et 3).

De part et d'autre du plan P, le support 12 comporte deux séries de quatre encoches 24 alignées deux à deux.

Chaque encoche 24 se présente sous la forme d'une encoche à bords ou faces 26 qui sont parallèles à la direction I d'introduction ou d'extraction d'une carte à mémoire électronique dans un dispositif de lecture-écriture (non représenté) équipé d'un connecteur électrique conforme aux enseignements de l'invention. Selon une variante de réalisation (non représentée), et dans le cas d'un connecteur dont les sorties de raccordement des conducteurs 14 sont droites et parallèles à la face de contact 20, la face inférieure 22 n'est pas en appui car le connecteur peut être encastré dans un logement de la carte.

Dans la face inférieure d'appui 22, qui est prévue pour prendre appui contre une face d'une carte à circuit imprimé du dispositif de lecture-écriture (non représentée), chaque encoche 24 se prolonge longitudinalement selon la direction I par une rainure 28 qui débouche dans l'un des deux bords transversaux opposés 30 du support 12.

De part et d'autre de chacune des huit rainures 28, le support 12 comporte une fente 32 d'accrochage d'un conducteur 14 et une fente 34 de stabilisation du conducteur.

Les fentes de fixation 32 et de stabilisation 34 sont réalisées dans l'épaisseur du corps isolant 12 et elles débouchent longitudinalement dans un bord transversal 30.

La fente longitudinale d'accrochage 32 est délimitée par deux surfaces parallèles et opposées 36 et par deux bords longitudinaux 38.

De même, la fente longitudinale de stabilisation 34 est délimitée par deux surfaces parallèles de stabilisation 40 et par deux bords longitudinaux 42.

Comme on peut le voir sur les figures chaque fente d'accrochage 32 s'étend longitudinalement sur une longueur nettement supérieure à celle des fentes de stabilisation 34.

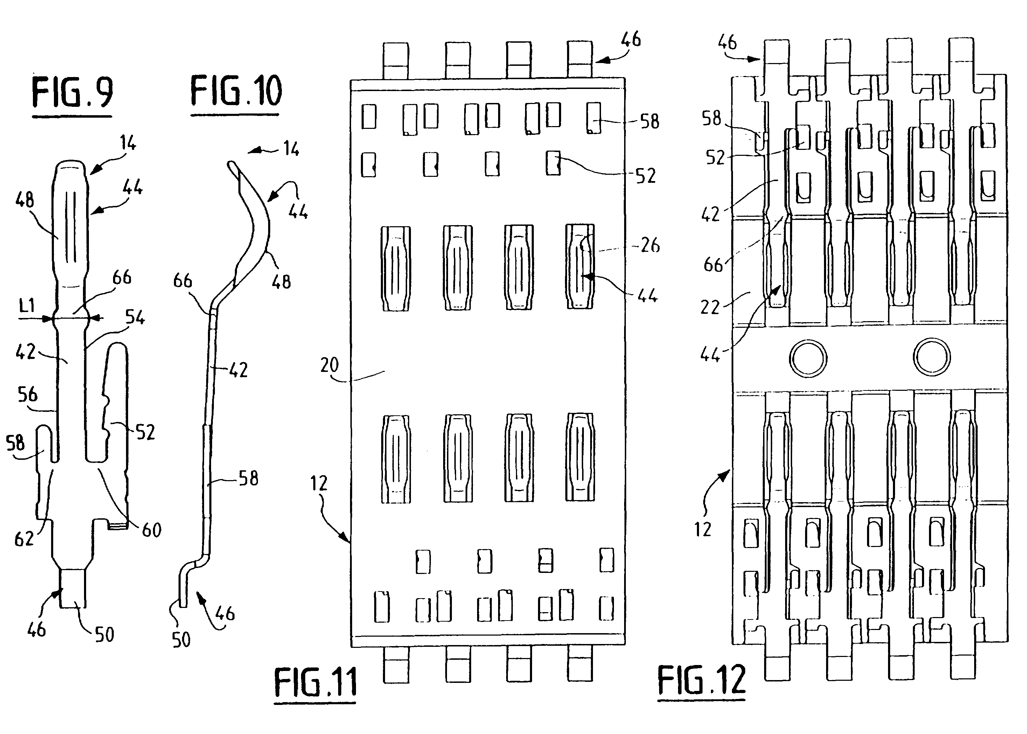

On décrira maintenant en détail l'élément conducteur illustré aux figures 9 et 10.

Chaque élément conducteur 14 est réalisé sous la forme d'une lame de contact réalisée par découpage, pliage et cambrage dans un feuille de matériau conducteur.

Chaque lame 14 est constituée par une branche longitudinale principale qui constitue la partie médiane de liaison 42 entre une extrémité libre incurvée et cambrée de contact 44 et une extrémité libre pliée de raccordement 46.

Selon une conception connue, l'extrémité libre de contact 44 est prévue pour être reçue dans une encoche 24 de manière que sa portion arrondie convexe 48 fasse saillie au-delà de la face plane de contact 20 lorsque le conducteur 14 est en position montée dans le support isolant 12.

L'extrémité libre de raccordement 46 est pliée à 90° par rapport au plan général dans lequel s'étend la branche principale 42 de manière à s'étendre le long du bord transversal 30 du support isolant et de manière que son tronçon d'extrémité libre 50 puisse par exemple, dans ce mode de réalisation, être soudé sur une piste conductrice de la carte à circuit imprimé. Les extrémités libres de raccordement 46 peuvent bien entendu également être du type droites (évoqué précédemment) ou du type à piquer.

Selon une conception connue, chaque lame ou conducteur 14 comporte une patte latérale d'accrochage 52 en forme de harpon qui s'étend longitudinalement le long d'un premier bord longitudinal 54 de la branche principale de liaison 42 et qui est prévue pour être reçue dans une fente d'accrochage 32, par introduction selon la direction I.

Conformément aux enseignements de l'invention, chaque lame ou conducteur 14 comporte une patte latérale de stabilisation 58 qui s'étend longitudinalement le long du second bord longitudinal 56 de la branche principale 42.

Les pattes latérales d'accrochage 52 et de stabilisation 58 sont reliées aux bords longitudinaux 54 et 56 par une traverse 60, 62 respectivement.

La patte de stabilisation 58 est prévue pour être reçue, par introduction selon la direction I, dans une fente de stabilisation 34.

En position montée, les faces opposées de la patte d'accrochage 52 sont reçues entre les surfaces parallèles 36 de la fente d'accrochage 32 tandis que les faces opposées de la patte latérale de stabilisation 58 sont reçues entre les surfaces de stabilisation opposées 40 de la fente de stabilisation 34.

La patte latérale de stabilisation est également réalisée sous la forme d'un harpon pour améliorer l'accrochage du conducteur 14.

La face 64 de la branche principale médiane de liaison 42 est, en position montée du conducteur 14, en regard du le fond de la rainure 28 dans lequel est formée une gorge longitudinale centrale 66 dont la largeur transversale L3 est inférieure à la largeur L2 de la rainure 28.

On comprend aisément que, grâce à l'agencement des pattes latérales d'accrochage 52 et de stabilisation 58, la lame de contact 14 est parfaitement maintenue dans un plan parallèle au plan général du support 12 dans lequel elle est encastrée au voisinage de la zone de raccordement de la branche principale médiane de liaison 42 avec les traverses 60 et 62 assurant ainsi une très bonne stabilité de chaque lame 14.

Notamment, lors de l'introduction d'une carte à mémoire, ce sont les branches principales 42 qui se déforment élastiquement, selon une direction générale perpendiculaire au plan de la face de contact 20, sans qu'il n'apparaisse de mouvements de basculement parasites des lames 14 autour d'un axe sensiblement longitudinal.

La face 64 de la branche principale médiane de liaison 42 est, en position montée du conducteur 14, en regard du le fond de la rainure 28 dans lequel est formée une gorge longitudinale centrale 66 dont la largeur transversale L3 est inférieure à la largeur L2 de la rainure 28.

La gorge 66 permet, lors de l'insertion du conducteur 14 au cours de laquelle l'extrémité 44 est reçue en coulissement dans la gorge 66, de limiter le fléchissement de la partie déformable élastiquement et d'éviter ainsi une déformation permanente nuisible au fonctionnement ultérieur du connecteur.

Pour délimiter la position de repos de l'extrémité incurvée de contact 44 par rapport au support 12, position dans laquelle elle fait saillie au-delà de la face plane de contact 20 et selon une autre caractéristique de l'invention, dans la zone de raccordement entre la branche principale 42 et l'extrémité incurvée 44, chaque lame 14 comporte une portion élargie 66 dont la largeur transversale L1 est légèrement supérieure à la largeur L3 de la gorge 66 et inférieure à la largeur L2 de la rainure 28, la portion élargie étant en appui au repos sur les bords 67 de la gorge 66.

Selon une conception connue, le positionnement au repos de chaque lame 14 peut être complété par un bec formé à l'extrémité libre de l'extrémité de raccordement.

La conception des moyens de stabilisation selon l'invention permet, tout assurant une plus grande fiabilité et une plus grande qualité des contacts électriques lors de l'introduction de la carte, de réaliser des connecteurs d'une épaisseur très réduite dans la mesure où ils ne comportent plus de couvercles complémentaires du support isolant 12 pour assurer l'encastrement des lames de contact 14.

## Revendications

1. Connecteur électrique du type comportant un support (12) en matériau isolant réalisé par moulage présentant une face plane de contact (20) et une pluralité de conducteurs électriques parallèles (14) en forme de lames déformables élastiquement qui s'étendent longitudinalement et dont chacune comprend une première extrémité incurvée de contact (44) faisant saillie hors du plan de la face plane de contact (20) du support (12), une portion médiane (42) de liaison de la lame (14) au support (12) et une seconde extrémité (46) de raccordement de la lame (14), du type dans lequel la partie médiane de liaison (42) de chaque lame (14) comporte des moyens (52) de fixation de la lame (14) au support (12) qui sont constitués par une patte latérale d'accrochage (52) en forme de harpon qui s'étend parallèlement à la partie médiane de liaison (42), le long d'un premier bord longitudinal (54) de celle-ci (42), avec une fente la séparant de ce bord longitudinal, et qui est reçue dans une fente correspondante (32) du support (12), chaque lame de contact (14) comportant une patte latérale de stabilisation (58) qui s'étend, le long du second bord longitudinal (56) de la partie médiane de liaison (42), avec une fente la séparant de ce bord longitudinal, et qui prend appui contre au moins une surface de stabilisation (40) en vis-à-vis du support (12) parallèle au plan de la face plane de contact (20).

2. Connecteur électrique selon la revendication 1, caractérisé en ce que la patte latérale de stabilisation (58) s'étend parallèlement à la partie médiane de liaison (42).

3. Connecteur électrique selon la revendication 2, caractérisé en ce que la patte latérale de stabilisation (58) est reçue dans une fente correspondante (34) du support (12) délimitée par deux surfaces parallèles de stabilisation (40).

4. Connecteur électrique selon l'une quelconque des revendications 1 à 3, caractérisé en ce que la patte latérale d'accrochage (52) et la patte latérale de stabilisation (58) sont chacune reliée au bord longitudinal adjacent (54, 56) de la partie médiane de liaison (42) par une traverse (60, 62), et en ce que les deux traverses (60, 62) sont alignées transversalement.

5. Connecteur selon l'une quelconque des revendications précédentes, caractérisé en ce que la partie médiane de liaison (42) comporte une branche (42) dont l'extrémité libre se prolonge par l'extrémité de raccordement (46) de la lame (14).

6. Connecteur électrique selon la revendication 5, caractérisé en ce que la branche (42) de la partie médiane de liaison s'étend en regard d'une rainure (28) formée en vis-à-vis dans une face plane (22) du support (12) parallèle au plan de la face plane de contact (20) pour permettre un fléchissement de la branche (42) selon une direction sensiblement perpendiculaire à la face plane de contact (20) du support (12).

7. Connecteur électrique selon la revendication 6, caractérisé en ce que la rainure (28) en regard de laquelle s'étend la branche (42) de la partie médiane de liaison est formée dans une face plane d'appui (22) du support (12) parallèle et opposée à la face plane de contact (20), et en ce que le support (12) comporte, pour chaque lame (14), une encoche longitudinale (24) qui prolonge la rainure et par laquelle l'extrémité incurvée (44, 48) de contact fait saillie hors du plan de la face plane de contact (20).

8. Connecteur électrique selon la revendication 7, caractérisé en ce que l'extrémité incurvé (44) de contact de chaque lame (14) est reliée à la partie médiane de liaison (42) par une zone élargie (66) dont la largeur (L1) transversale est supérieure à la largeur (L3) d'une gorge formée dans le fond de la rainure (28) et est inférieure à la largeur (L2) de la rainure 28.

9. Connecteur électrique selon l'une quelconque des revendications précédentes, caractérisé en ce que l'extrémité de raccordement (46) de chaque lame (14) s'étend selon une direction perpendiculaire au plan de la face plane (20) de contact du support (12) en éloignement de la branche (42) de la partie médiane de liaison de la lame (14) et le long d'un bord transversal (30) du support (12).

10. Connecteur électrique pour le raccordement d'une carte à mémoire électronique comportant sur l'une de ses faces principales une pluralité de plages de contact électrique alignées parallèlement à la direction d'introduction (I) de la carte dans une dispositif de lecture-écriture, caractérisé en ce qu'il est réalisé conformément à l'une quelconque des revendications précédentes.

## Patentansprüche

1. Elektrischer Verbinder vom Typ mit einem durch Abformung realisierten Träger (12) aus isolierendem Material, der eine ebene Kontaktfläche (20) und eine Mehrzahl von parallelen elektrischen Leitern (14) in Form von elastisch verformbaren Lamellen aufweist, die sich longitudinal erstrecken und von denen jede ein erstes gekrümmtes Kontaktende (44), das über die Ebene der ebenen Kontaktfläche (20) des Trägers (12) vorspringt, einen mittleren Abschnitt (42) zur Verbindung der Lamelle (14) mit dem Träger (12) und ein zweites Ende (46) zum Anschluß der Lamelle (14) aufweist, von dem Typ, bei dem der mittlere Verbindungsabschnitt (42) jeder Lamelle (14) Mittel (52) zum Befestigen der Lamelle (14) am Träger (12) aufweist, die gebildet sind durch einen seitlichen Einhakfuß (52) in Widerhakenform, der sich parallel zum mittleren Verbindungsabschnitt (42) entlang eines ersten Längsrandes (54) von diesem (42)mit einem ihn von diesem Längsrand trennenden Schlitz erstreckt und der in einem entsprechenden Schlitz (32) des Trägers (12) aufgenommen ist, dadurch gekennzeichnet, daß jede Kontaktlamelle (14) einen seitlichen Stabilisierungsfuß (58) aufweist, der sich entlang des zweiten Längsrandes (56) des mittleren Verbindungsabschnitts (42) erstreckt, mit einem Schlitz, der ihn von diesem Längsrand trennt, und der an wenigstens einer gegenüberliegenden Stabilisierungsoberfläche (40) des zur Ebene der ebenen Kontaktfläche (20) parallelen Trägers (12) anliegt.

2. Elektrischer Verbinder nach Anspruch 1, dadurch gekennzeichnet, daß sich der seitliche Stabilisierungsfuß (58) parallel zum mittleren Verbindungsabschnitt (42) erstreckt.

3. Elektrischer Verbinder nach Anspruch 2, dadurch gekennzeichnet, daß der seitliche Stabilisierungsfuß (58) in einem entsprechenden Schlitz (34) des Trägers (12) aufgenommen ist, der durch zwei parallele Stabilisierungsoberflächen (40) begrenzt ist.

4. Elektrischer Verbinder nach einem beliebigen der Ansprüche 1 bis 3, dadurch gekennzeichnet, daß der seitliche Einhakfuß (52) und der seitliche Stabilisierungsfuß (58) jeweils mit dem benachbarten Längsrand (54, 56) des mittleren Verbindungsabschnitts (42) über einen Querträger (60, 62) verbunden sind, und daß die zwei Querträger (60, 62) in Querrichtung ausgerichtet sind.

5. Elektrischer Verbinder nach einem beliebigen der vorhergehenden Ansprüche, dadurch gekennzeichnet, daß der mittlere Verbindungsabschnitt (42) einen Ast (42) umfaßt, dessen freies Ende durch das Anschlußende (46) der Lamelle (14) verlängert ist.

6. Elektrischer Verbinder nach Anspruch 5, dadurch gekennzeichnet, daß der Ast (42) des mittleren Verbindungsabschnitts sich einer Rille (28) zugewandt erstreckt, die gegenüberliegend in einer ebenen, zur Ebene der ebenen Kontaktfläche (20) parallelen Fläche (22) des Trägers (12) gebildet ist, um ein Biegen des Astes (42) in einer zu der ebenen Kontaktfläche (20) des Trägers (12) im wesentlichen senkrechten Richtung zu ermöglichen.

7. Elektrischer Verbinder nach Anspruch 6, dadurch gekennzeichnet, daß die Rille (28), der gegenüber sich der Ast (42) des mittleren Verbindungsabschnitts erstreckt, in einer ebenen und der ebenen Kontaktfläche (20) entgegengesetzten Auflagefläche (22) des Trägers (12) gebildet ist, und daß der Träger (12) für jede Lamelle (14) eine longitudinale Kerbe (24) umfaßt, die die Rille verlängert und durch die das gekrümmte Kontaktende (44, 48) aus der Ebene der ebenen Kontaktfläche (20) vorsteht.

8. Elektrischer Verbinder nach Anspruch 7, dadurch gekennzeichnet, daß das gekrümmte Kontaktende (44) jeder Lamelle (14) mit dem mittleren Verbindungsabschnitt (42) über eine verbreiterte Zone (66) verbunden ist, deren transversale Breite (L1) größer ist als die Breite (L3) einer Nut, die am Boden der Rille (28) gebildet ist, und die kleiner ist als die Breite (L2) der Rille (28).

9. Elektrischer Verbinder nach einem beliebigen der vorhergehenden Ansprüche, dadurch gekennzeichnet, daß das Anschlußende (46) jeder Lamelle (14) sich in einer Richtung senkrecht zur Ebene der ebenen Kontaktfläche (20) des Trägers (12) und fort von dem Ast (42) des mittleren Verbindungsabschnitts der Lamelle (14) und entlang eines der Seitenränder (30) des Trägers (12) erstreckt.

10. Elektrischer Verbinder zum Anschließen einer elektronischen Speicherkarte, die an einer ihrer Hauptflächen eine Mehrzahl von parallel zur Einführungsrichtung (I) der Karte in eine Schreib-Lesevorrichtung ausgerichteten elektrischen Kontaktfeldern aufweist, dadurch gekennzeichnet, daß er nach einem beliebigen der vorhergehenden Ansprüche ausgebildet ist.

## Claims

1. Electrical connector of the type which comprises a support (12) made of insulating material, produced by moulding, which has a flat contact surface (20) and a plurality of parallel electrical conductors (14) in the form of resiliently deformable plates, which extend longitudinally, and each of which comprises a first, curved, contact end (44), which projects beyond the plane of the flat contact surface (20) of the support (12), a median portion (42) for connection of the plate (14) to the support (12), and a second end (46) for connection of the plate (14), of the type in which the median connection part (42) of each plate (14) comprises means (52) for securing the plate (14) to the support (12), consisting of a lateral hooking tab (52) in the shape of a harpoon, which extends parallel to the median connection part (42), along a first longitudinal edge (54) of the latter (42), with a slit which separates the tab from this longitudinal edge, and which is received in a corresponding slit (32) in the support (12), each contact plate (14) comprising a lateral stabilisation tab (58), which extends along the second longitudinal edge (56) of the median connection part (42), with a slit which separates it from this longitudinal edge, and which is supported against at least one stabilisation surface (40), opposite the support (12), parallel to the plane of the flat contact surface (20).

2. Electrical connector according to Claim 1, characterised in that the lateral stabilisation tab (58) extends parallel to the median connection part (42).

3. Electrical connector according to Claim 2, characterised in that the lateral stabilisation tab (58) is received in a corresponding slit (34) in the support (12), which slit is delimited by two parallel stabilisation surfaces (40).

4. Electrical connector according to any one of Claims 1 to 3, characterised in that the lateral hooking tab (52) and the lateral stabilisation tab (58) are each connected to the adjacent longitudinal edge (54, 56) of the median connection part (42) by a cross-piece (60, 62), and in that the two cross-pieces (60, 62) are aligned transversely.

5. Connector according to any one of the preceding claims, characterised in that the median connection part (42) comprises a branch (42), the free end of which is extended by the connection end (46) of the plate (14).

6. Electrical connector according to Claim 5, characterised in that the branch (42) of the median connection part extends opposite a slot (28), which is formed opposite in a flat surface (22) of the support (12), parallel to the plane of the flat contact surface (20), in order to permit bending of the branch (42), in a direction which is substantially perpendicular to the flat contact surface (20) of the support (12).

7. Electrical connector according to Claim 6, characterised in that the slot (28) opposite which the branch 42 of the median connection part extends, is formed in a flat support surface (22) of the support (12), parallel and opposite to the flat contact surface (20), and in that, for each plate (14), the support (12) comprises a longitudinal notch (24) which extends the slot, and through which the curved contact end (44, 48) projects beyond the plane of the flat contact surface (20).

8. Electrical connector according to Claim 7, characterised in that the curved contact end (44) of each plate (14) is connected to the median connection part (42) by an enlarged area (66) the transverse width (L1) of which is larger than the width (L3) of a groove formed in the base of the slot (28), and is smaller than the width (L2) of the slot (28).

9. Electrical connector according to any one of the preceding claims, characterised in that the connection end (46) of each plate (14) extends in a direction which is perpendicular to the plane of the flat contact surface (20) of the support (12), in the direction away from the branch (42) of the median connection part of the plate (14), and along a transverse edge (30) of the support (12).

10. Electrical connector for connection of an electronic memory card, comprising on one of its main surfaces a plurality of electrical contact areas, which are aligned parallel to the direction of insertion (I) of the card in a read-write device, characterised in that it is produced according to any one of the preceding claims.
